# EUROPEAN PATENT SPECIFICATION

(11) **EP 1 336 771 B1**
(45) Date of publication and mention of the grant of the patent: **17.05.2006**
(21) Application number: 03003319.5
(22) Date of filing: 13.02.2003
(51) Int. Cl.: F16F 13/08

(54) **A hydroelastic mounting, particularly for an internal combustion engine**
Hydroelastisches Lager, insbesondere für einen Verbrennungsmotor
Support hydroélastique, en particulier pour moteur à combustion interne

(30) Priority: 15.02.2002 IT TO20020128
(43) Date of publication of application: 20.08.2003
(73) Proprietor: C.F. GOMMA S.p.A., 25050 Passirano (Brescia) (IT)
(72) Inventor: Gazzoli, Gianenrico, 25035 Ospitaletto (BS) (IT); Vettore, Claudio, 25086 Rezzato (BS) (IT)
(74) Representative: Vanzini, Christian

(56) References cited:
- US-A- 5 549 283
- US-A- 5 961 103
- US-A- 6 015 141

## Description

The present invention relates to hydroelastic mountings.

These hydroelastic mountings are used mainly for the suspension of internal combustion engines in vehicles but they may be used in general wherever it is necessary to provide an interface member between a vibrating element and a structure to be insulated from that element.

Hydroelastic mountings of this type comprise substantially a load-bearing body which encloses a mass of liquid (known as a column of liquid) the resonance frequency of which is tuned to the characteristic resonance frequency of the vibration mode to be damped. This column of liquid passes back and forth between two chambers, known as a working chamber and an expansion chamber, and the column of liquid is formed in the wall which separates the two chambers. A high-frequency de-coupling valve may be interposed in this wall between the two chambers.

In most conventional engine mountings, the valve is disposed beneath the working chamber and above the expansion chamber. A single membrane limits the movement of the fluid at the level of the working chamber. This membrane is generally disposed in the lower portion of the engine mounting. An arrangement of this type is known, for example, from the patents FR-2 467 724 and FR-2 810 712.

Engine mountings in which the valve faces a chamber communicating with the working chamber, on the other hand, are known from the patents FR-2 796 113 and FR-2 796 114.

The present invention relates in particular to a hydroelastic mounting according to the preamble to Claim 1.

A hydroelastic mounting of this type is known from US-A-5 961 103 and US-A-5 549 283. The object of the invention is to provide a hydroelastic mounting which is simple and inexpensive to produce and which also has a modular structure that can be adapted to the type of vibrating element to be supported.

This object is achieved, according to the invention, by a mounting as defined in the claims.

A preferred but non-limiting embodiment of the invention will now be described with reference to the appended drawings, in which:
Figure 1 is a perspective view of a mounting according to the invention;
Figure 2 is a perspective view of the mounting of Figure 1, viewed in the direction of the arrow indicated II;
Figure 3 is a longitudinal section through the mounting of Figure 2, taken in the direction of the arrow III-III of that drawing;
Figure 4 is a cross-section through the mounting of Figure 2, taken in the direction of the arrow IV-IV of that drawing;
Figure 5 is an exploded view of the mounting of Figure 1;
Figure 6 is an exploded view of an element of the mounting according to the invention, indicated by the arrow VI of Figure 5;
Figure 7 is a view from below of an element of the mounting indicated by the arrow VII of Figure 6;
Figure 8 is a side view of the element of Figure 7, taken in the direction of the arrow VIII of that drawing;
Figure 9 is a view of a detail of the element of Figure 6, indicated by the arrow IX in that drawing, in a condition prior to assembly;
Figure 10 is a view of the detail of Figure 9 in an assembly condition;
Figure 11 is a view from below of a second element of the mounting, indicated by the arrow XI of Figure 5;
Figures 12-14 are views of the element of Figure 11 from above; and
Figure 15 is a view of a detail of Figure 14, indicated by the arrow XV.

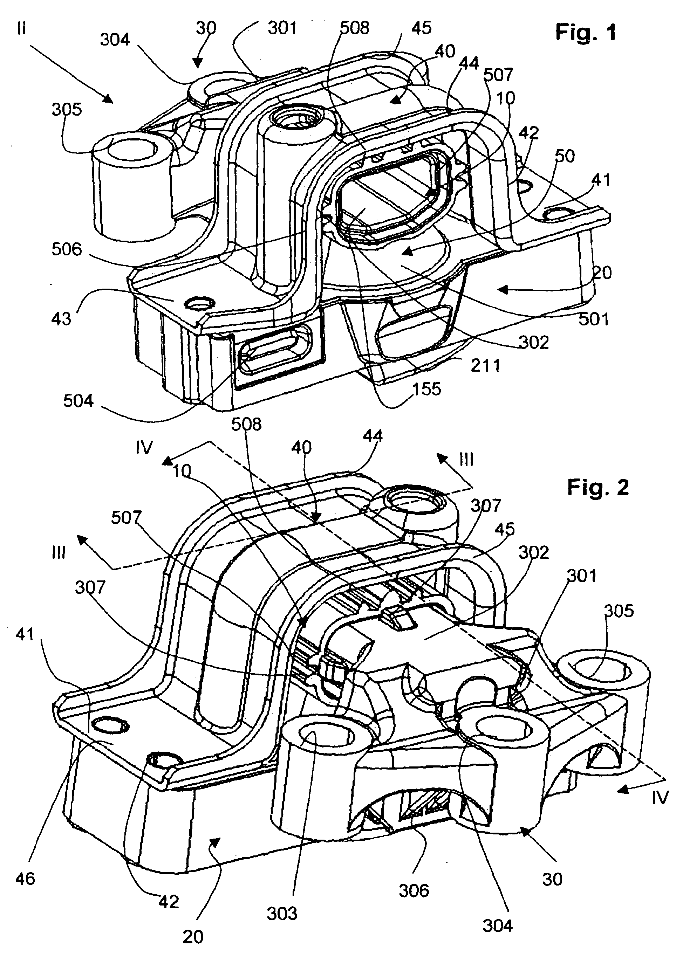

With reference to Figures 1, 2 and 5, a mounting according to the invention, for example, for an internal combustion engine, comprises substantially a body 10, a fixing base or base box 20, a connecting arm 30, and a double-elbowed oscillation-limiting strap 40; all of these will be described below.

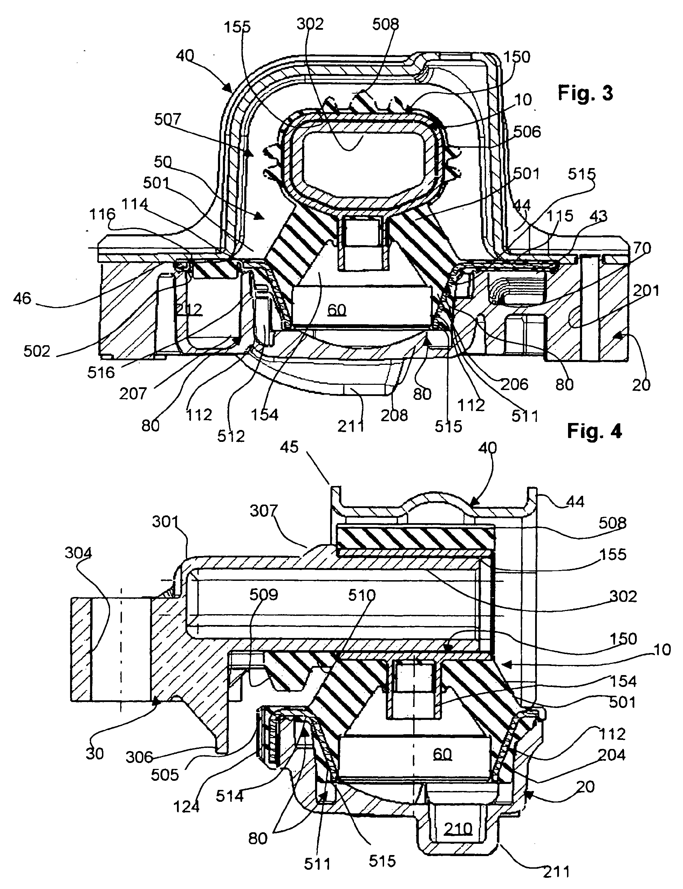

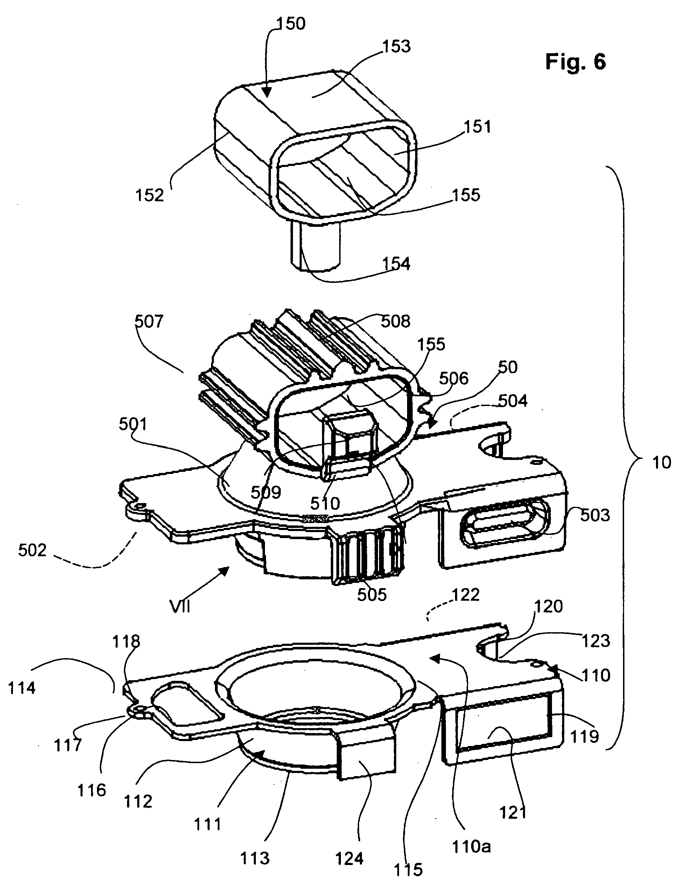

With reference to Figure 6, the body 10 comprises two metal reinforcing cores (preferably made of steel or aluminium), that is, a lower, main core 110 and an upper, auxiliary, tube-like connecting core 150. An elastomeric mass 50 (see in particular Figure 3) is interposed between the cores 110 and 150 and connects them.

The lower core 110 (Figure 6) comprises a plate 110a provided with a vertical collar 111 in an approximately central position. The collar 111 is turned downwards and has a partially frustoconical portion 112. This configuration enables the elastomeric mass 50 to adhere internally to the frustoconical portion 112 (Figures 3 and 4) and performs a load-bearing function. As will be described below, a cavity is formed in this region and constitutes a working chamber 60 (Figures 3 and 4) containing a liquid.

The frustoconical portion 112 has a cylindrical extension 113 which can penetrate the base box 20 to a greater depth.

A flange 114 for supporting a valve 502 (Figure 3) and a flange 115 for supporting at least one membrane, as will be explained below, extend horizontally from opposite sides of the vertical collar 111.

The flange 114 has a hole 116 which constitutes the seat for the valve 502. The shape of this hole 116 is calculated in a manner such as to create a cross-section which can achieve a reduction in stiffness at the acceptable vibration frequency.

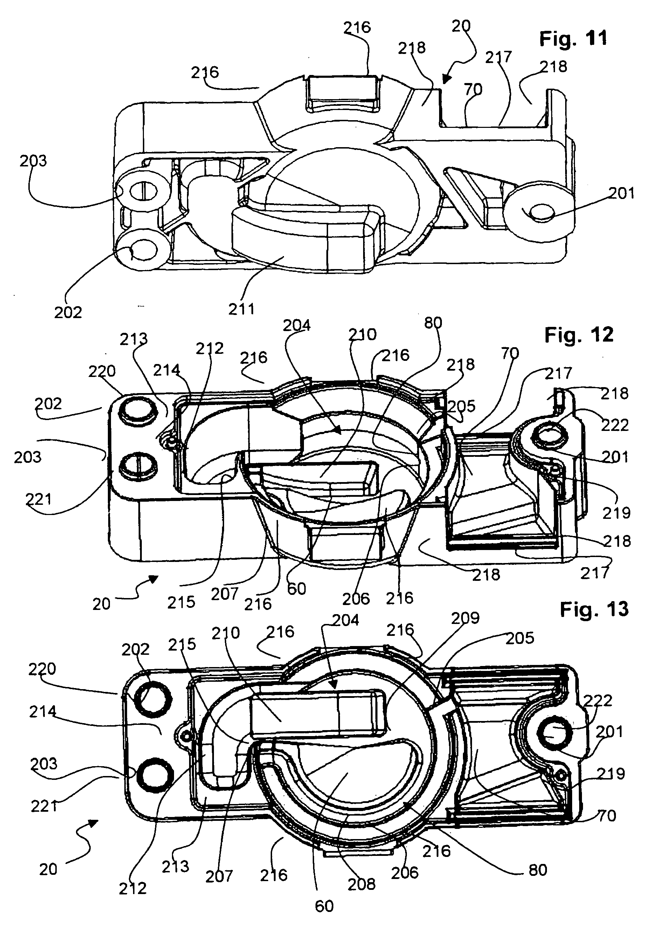

The flange 114 also comprises a projection 117. This projection 117 has a through-hole or eyelet 118 which permits the clinching of a stud 214 (in Figures 12-14) formed integrally with the base box 20, as will be described further below.

The horizontal plate 110a may also have a plurality of through-holes (not shown).

The other, diametrally opposed flange 115 of the main core 110 comprises two tabs 119 and 120 which are bent perpendicularly towards the base box 20. These tabs have openings 121 and 122. A recess 123 permits the insertion of a fixing screw (not shown) for fixing the mounting to a load-bearing structure such as the structure or bodywork of a vehicle.

All of the surfaces of the main core 110 are covered with elastomer to ensure the final impermeability of the unit as well as corrosion resistance.

As will be described below, a tab 124 (Figure 6) produced by drawing of the main core 110 and turned towards the base 20 is intended to support a buffer 505 for limiting transverse oscillations of the vehicle's engine (Figure 4).

This tab 124 also limits the vertical movements of the arm 30 by withstanding the stresses of a buffer 509 connected to the upper tubular core 150 (Figure 4).

The tube-like connecting core 150 enables the elastomeric mass 50 to be connected to an element to be insulated from the remaining structure, in particular from the engine. This tubular core 150, which is made of steel, cast iron, or aluminium, is of parallelepipedal shape. It is covered with elastomeric material and supports oscillation-limiting buffers 506-508 which will be described in greater detail below.

The outer surface 151 of this core 150 is intended to hold the buffer 506 relating to forward travel, for example, of the vehicle; the face 152 is intended to hold the buffer 507 for rearward travel; the upper surface 153 of the core is intended to hold the buffer 508 for limiting vertical stretching oscillations.

The tubular core 150 may also have a cylindrical or frustoconical appendage 154. This appendage 154 is disposed beneath the core 150 and may be assembled therewith by welding or may be produced by drawing. The appendage 154 has the function of increasing the stiffness of the body 10 with respect to shear stresses.

A central duct 155 defined in the core 150 permits coupling with the connecting arm 30. This coupling is rigid. The duct 155 may be lined with elastomeric material during the over-moulding of the core 150.

The elastomeric mass 50 connects the lower core 110 to the tubular core 150, performing a load-bearing function, filtering vibrations, and ensuring leaktightness of the hydroelastic mounting.

The load-bearing function is achieved by virtue of a conical portion 501 of the elastomeric mass 50 which connects the lower core 110 to the upper core 150. This portion 501 is hollow and helps to delimit in its interior the working chamber 60 which will be described in greater detail below.

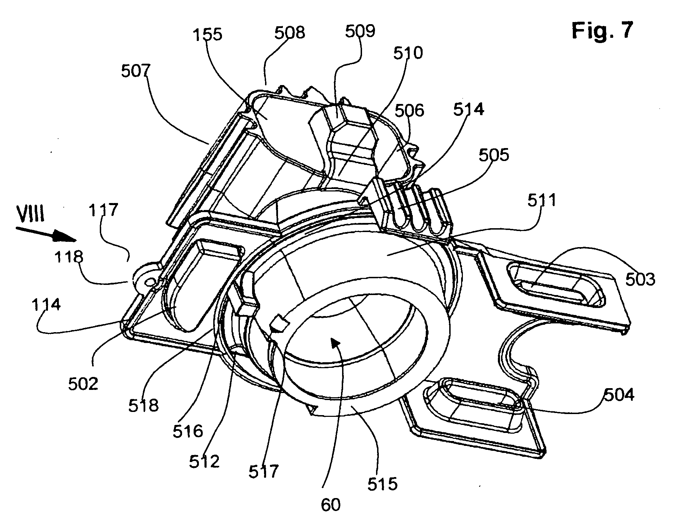

The lower core 110 is entirely covered with elastomeric material. On the side of this core having the flange 114, there is a valve 502 (shown, for example, in Figure 7), disposed inside the seat 116. The valve 502 is formed by an elastomeric mass the thickness of which is determined according to the required pressure seal. On its upper side the valve has a recess with a depth of about 1 mm relative to the outer surface of the elastomeric layer disposed on the horizontal plate 110a. An operating clearance is thus provided. The cross-section of the valve 502 is such that the product of this cross-section and the clearance is slightly less than the product of the cross-section of the piston equivalent to the body 10 and the amplitude of excitation in the vibration-frequency range in which the dynamic stiffness is to be reduced.

On the side of the core 110 having the flange 115, there are membranes 503 and 504 produced by moulding. These membranes face an expansion chamber 70 (which will be described below) and have a corrugated shape which can unfold without increasing the stiffness of the pressure seal when the liquid passes from the working chamber 60 towards the expansion chamber 70. According to the type of structure to be insulated, a single membrane of larger cross-section may even suffice.

The membranes 503 and 504 are disposed in the seats 121 and 122 of the lower core 110.

A buffer 505 for transverse oscillations is moulded over the tab 124. The shape of this buffer 505 is adjusted for the desired flexibility curve. In general this shape is determined so as to limit the transverse oscillations of the engines to about 10 mm.

The tubular connecting core 150 supports further buffers. The region 151 supports the buffer 506 for forward travel and the region 152 supports the buffer 507 for rearward travel. The upper region 153, on the other hand, supports the buffer 508 for recoil or stretching movement.

In general, the oscillations of engines in planes other than transverse planes are limited to about 20 mm.

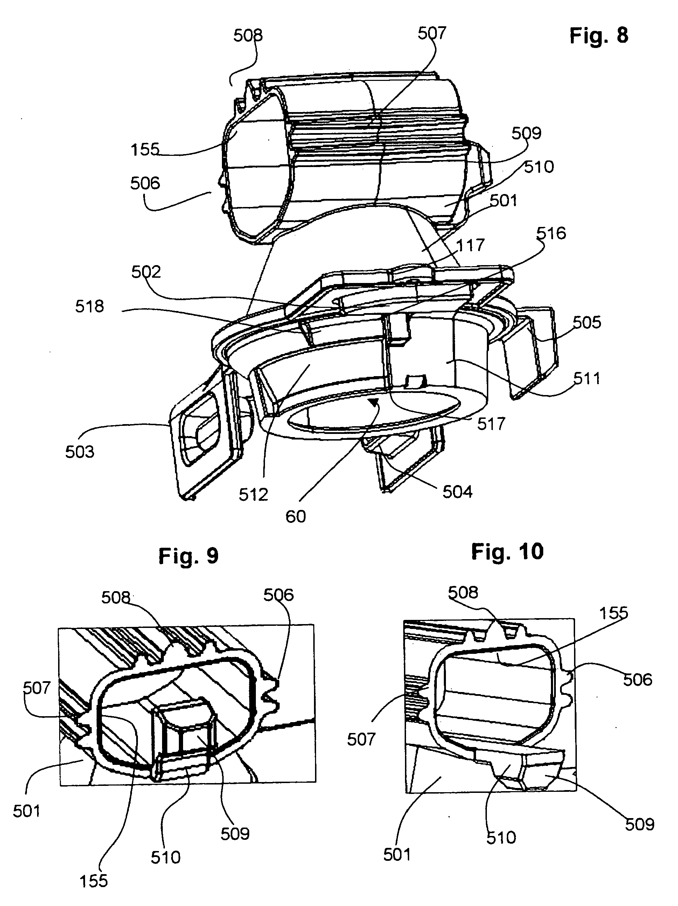

A compression-limiting buffer 509 is formed by moulding in a vertical arrangement (shown, for example, in Figure 9) so as to facilitate its moulding. It is fixed to the tubular core 150 by means of a flexible tab 510 of that core. After the mounting of the connecting arm 30 in the core 150, the buffer 509 is arranged in a horizontal position (shown in Figure 10) and has a damping effect (see Figure 4) by virtue of the compression of the elastomeric mass 509 between the horizontal metal portion of the tab 124 and the lower surface of the connecting arm 30.

The collar 111 is also covered with a coating of elastomeric material which defines, and renders leaktight, a channel 80 (shown, for example, in Figures 3 and 4) formed inside the base box 20. This channel 80 interconnects the chambers 60 and 70.

As shown in Figures 7 and 8, this coating comprises a thicker portion 511 which covers a sector of about three quarters of the circumference of the collar 111, and a fluted sector 512 facing the valve 502. The region 511 (Figure 4) delimits the top of the channel 80, in a path extending along two horizontal planes, that is, an upper plane 514 and a lower plane 515.

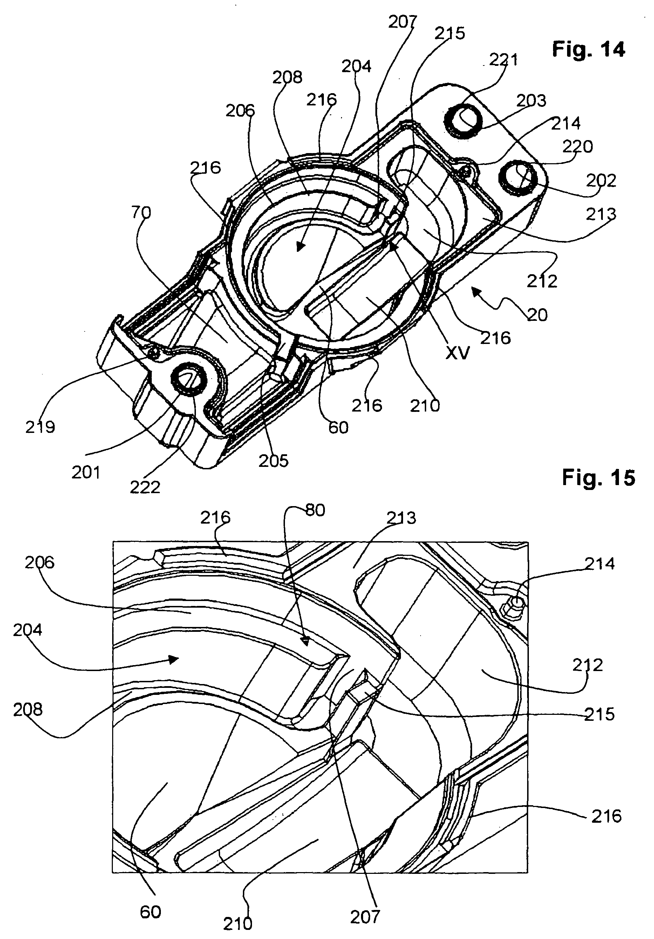

As will be explained further below, a tooth 516 made of elastomeric material (Figure 8), produced by moulding, forces the fluid circulating through the channel 80 to change plane or level during its travel inside the base box 20. A recess 517 of the portion 511 made of elastomeric material forms the lower end of a vertical portion of the channel 80 and the inlet to a lower horizontal portion of that channel. The recess 517 is disposed in the region of a vertical groove 207 of the box 20 (Figures 14 and 15).

Continuity of the fluid channel is thus achieved by the assembly of the body 10 on the fixing base 20.

A recessed portion 518 (Figure 8) of the elastomeric coating of the collar 111 permits a uniform flow of fluid from the working chamber 60 towards a chamber 212 disposed beneath the valve 502, which will be described in greater detail below.

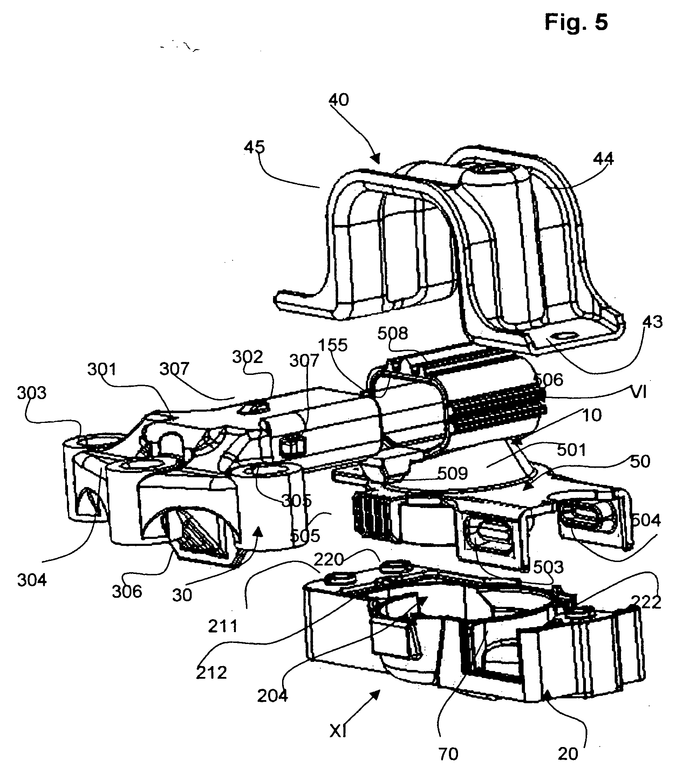

With reference to Figures 5 and 11-15, the fixing base 20 may be made of aluminium, by forming or casting, or of injection-moulded thermoplastic material. The base has a parallelepipedal shape and comprises, at its ends, through-holes 201, 202 and 203 for screws for fixing the mounting to a load-bearing structure.

The base or box 20 comprises, in its centre, a housing 204 for the central portion 111 of the mounting body 10.

The expansion chamber 70 is formed in one of the ends of the base 20 and is connected to the working chamber 60 by means of an opening 205 formed in the side wall of the housing 204 and adjacent an end of an arcuate shelf 206 which, as will become clearer from the following description, cooperates in delimiting the channel 80.

The cross-section and the length of the channel 80 can be adapted to the damping and frequency requirements that are necessary to prevent modes or movements induced by the wobbling of the engine.

The channel 80 (Figures 3 and 4) is delimited at the top and on the radially inner side by the portion 511 of elastomeric coating and is delimited at the bottom and on the radially outer side by the base or box 20.

When the fluid leaves the expansion chamber 70, it can enter the channel 80 through the opening 205 and then flows along the shelf 206, along a substantially semicircular, arcuate path before descending through the vertical groove 207 (which delimits the vertical portion of the channel 80) towards a lower groove 208 which is formed in the base 20 and which delimits the lower horizontal portion of the channel 80. The liquid can then enter the working chamber 60 through the outlet end 209 of the groove 208.

The shelf 206 and the groove 208 are connected to one another in the region of the groove 207 and, at this point, the elastomeric tooth 516 (Figures 7, 14 and 15) is arranged in contact with a bearing 215 located on one side of the groove 207.

An outwardly-extending projection 211 is formed in the base wall of the housing 204 of the base 20 and defines, on the side facing the chamber 60, a channel 210 which allows the fluid to circulate freely between the chamber 60 and the chamber 212.

The chamber 212, which is situated below the valve 502, will be referred to below as the valve or decoupler chamber. In this chamber or cavity there may be vertical candle-like projections (not shown), produced during the forming of the box 20, for limiting the downward movements of the valve 502. The number and cross-sectional area of any such projections depend on the stiffness of the valve 502.

Around the housing 204 provided in the base 20 for the collar 111 of the main core 110 there are clinching sectors 216 (Figure 12). These sectors, of which there are four in the embodiment shown, project relative to the upper face of the base or box 20. The number of sectors can be established in general in dependence on the force required for the clamping of the body 10 to the base or box 20.

The upper region of the box 20 comprises a recessed portion 213 which corresponds to the shape of the peripheral flange 114 of the plate 110a of the body 10.

A clinching stud 214 (or eyelet) may be provided in the base 20, outside the valve chamber 212 (Figures 14 and 15).

The expansion chamber 70 is defined in the box 20 on the opposite side to the valve chamber 212. The chamber 70 extends between the housing 204 for the collar 111 and the fixing hole 201. Channelled guides 217 and 218 can house the tabs 119 and 120 of the plate 110a which support the membranes 503 and 504.

The shape of the guides 217, 218 therefore corresponds to that of the rubber-coated tabs 119, 120. An excess of elastomer and a taper of the guides enable leaktightness to be achieved at the final assembly stage.

In the base or box 20 there is also another clinching stud 219, similar to that already described, which can also help to ensure leaktightness. Locally arranged clinching ribs may also be present.

If the base 20 is made of thermoplastic material, metal clamps (not shown) may be provided for ensuring leaktightness upon the screwing of the mounting onto the load-bearing structure to be insulated. These clamps or rings may be over-moulded or mounted by ultrasound or other techniques.

Clinching collars 220, 221 and 222, centred on the fixing holes 201-203 of the mounting and produced by forming, project from the upper face of the box 20.

Their height is less than or equal to the thickness of the plate 110a constituting the lower core 110 of the body of the engine mounting.

With reference to Figure 2, the connecting arm 30 is, for example, a metal part made of formed steel or cast iron, of drawn sheet-metal, or of aluminium, and comprises a portion 301 for fixing to the engine and a portion 302 suitable for being coupled with, or fitted in, the tubular connecting core 150 of the mounting.

The clamping of the core 150 onto the tenon-like portion 302 of the connecting arm 30 ensures that the portion 302 is held in position. Rubber moulded onto the inside of the tubular core 150 takes up manufacturing tolerances of the tenon-like portion 302 of the arm 30.

Fixing holes 303, 304, 305 are formed vertically in the portion 301 of the arm 30. The number and size of these holes depend on the dimensions of the fixing screws and on the stresses to be withstood.

A vertical projection 306 (shown in Figure 4), which extends below the arm 30 in the fixing region, limits transverse movements of the engine, transmitting the stresses to the elastomeric buffer 505.

Teeth 307 (Figure 2), produced in the arm 30 by forming or drawing, ensure the transverse positioning of the arm 30 in the tubular core 150.

With reference to Figures 1, 2 and 5, the oscillation-limiting strap 40 is, for example, an element made of drawn steel or formed aluminium. Its function is to withstand the stresses of the driving torque during forward or rearward travel by means of the elastomeric buffers 506 and 507, as well as vertical (upward) stretching oscillations by means of the elastomeric buffer 508. This strap has through-holes for screws, which correspond to those of the base 20.

The strap 40 limits upward oscillations of the valve 502 (Figure 3) and may have a local deformation of the region 46 on which the valve bears (shown in Figure 3) to permit a progressive movement. This deformation may be produced directly by drawing.

To ensure stress resistance the strap 40 preferably comprises reinforcing flanges 44 and 45 (Figure 5) which border its side edges.

The strap 40 may also comprise welded fixing nuts (not shown), the number of which depends on the design characteristics of the vehicle.

With reference to Figures 5 and 6, the manufacture of the mounting according to the invention provides initially for the production of the body 10 of the engine-mounting by the over-moulding of an elastomer which is caused to adhere to the lower core 110 and to the tubular core 150. The body 10 of the mounting is then coupled with the base 20 with the use of the studs 214 and the holes 118 of the lower core 110 as guiding and clinching elements and by folding the clinching sectors 216 onto the upper face of the plate 110a of the body 10. This operation can be performed submerged (by so-called assembly in a pool) or by evacuation of the cavities, and subsequent suction, of the fluid into them by virtue of the reduced pressure thus produced, with the addition of a sealing ball or rivet to complete the seal.

The oscillation-limiting strap 40 is then placed on the body-box unit 10-20, by causing the collars 220, 221 and 222 of the base 20 to coincide with the holes 41, 42 and 43 of the strap 40 and the collars 220, 221 and 222 are clinched or flared in a manner such as to clamp the two components onto one another. Assembly is necessary purely for transportation and for the various operations prior to fitting on the vehicle. Finally, the screwing to the structure of the vehicle provides for the clamping of the strap 40 onto the body-box unit 10-20, and the connecting arm 30 is fitted inside the tubular connecting core 150.

An alternative solution may provide for direct over-moulding of the elastomeric material onto the connecting arm 30 which will directly support the oscillation-limiting buffers relating to forward travel, rearward travel, compression and stretching.

As a result of vibrations, in general, the liquid in the mounting passes back and forth from the working chamber 60 to the expansion chamber 70 in dependence on the excitation imparted by the engine.

Two different situations are now described in particular.

The first situation relates to a typical mode of operation of the engine on its mountings. The excitation amplitude is of the order of one millimetre and is transmitted from the road. The equivalent piston formed by the conical portion of the elastomeric body 10 disposed between the tubular connecting core 150 and the lower core 110 causes the transfer of a volume of liquid from the working chamber 60 towards the expansion chamber 70, and *vice versa,* through the channel 80. This volume is equal to the cross-section equivalent to the piston formed by the body 10 multiplied by the excitation amplitude. This volume transferred is much greater than that which is accepted by the valve 502 and which is equal to the cross-section of the valve multiplied by its possible movement (corresponding to its clearance). The valve therefore comes to bear against the inner face of the portion 46 of the strap 40 and the column of liquid consequently fills the cavity 212.

The damping resonance can be reduced by adjustment of the length and cross-section of the channel 80. In other words, the mass 50 in movement is altered, taking into account that, when resonance is reached, there is no longer a flow of fluid. This leads to an increase in the stiffness of the assembly, to achieve a stiffness equal to the load-bearing stiffness increased by the pressure-sealing stiffness of the casing of the working chamber.

The second situation relates to the "hum" condition. In this case, the excitation amplitude is weaker and is such that the movement is, for example, about ± 0.1 mm for a frequency of 80 to 200 Hz. This is the steady-state driving excitation, without sudden changes in load. When the resonance of the channel, which is of the order of 9-11 Hz, has been passed, this resonance is no longer active since there is no longer a flow of fluid. On the other hand, the fluid is always transferred by the piston in minimal volumes. For this range of operation, it is ensured that the volume transferred is less than that which is permissible by the clearance of the valve 502. A hydraulic de-coupling, that is, a reduction in the stiffness transferred to the structure (the chassis), is thus obtained in the humming range.

As will be appreciated, since the membranes 503, 504 and the valve 502 are integral with the elastomeric mass coating the damping body 10, the number of components is substantially reduced and, since this body can close all of the chambers and the connecting ducts formed in the base box 20, it is possible to fill the body-base-box unit 10-20 with fluid and seal it hermetically before the assembly of the engine mounting is completed. These characteristics facilitate the automation of the manufacturing process and consequently reduce its costs.

Moreover, since the main components of the engine mounting can be manufactured separately because they are structurally separate, a modular structure that is easily adaptable to the type of engine to be supported is achieved according to the invention.

## Claims

1. A hydroelastic mounting to be interposed between a first, vibrating element to be supported and a second, load-bearing element to be insulated from the first element, in particular for the connection of a propulsion unit to a vehicle structure, the mounting comprising:
- a body (10) comprising a rigid upper portion (30, 150) and a rigid lower portion (110) which are connected by a mass (50) of resilient material, in particular, an elastomeric material, the upper portion being intended to be connected to the element to be supported;
- a casing (20, 40) which is intended to be connected to the load-bearing element and forms a housing (204) for the body (10); and
- damping means (60, 70, 80; 212; 501-504) for damping the movements of the upper portion (30, 150), the damping means comprising a main cavity or working chamber (60) and at least one auxiliary cavity (70; 212) which communicate with one another, are filled with liquid, and are provided with resiliently deformable walls (501; 502; 503, 504), at least one deformable wall (501) of the main cavity (60) being connected to the upper portion (30, 150) of the body (10);
wherein the body (10) is formed as a cover which is coupled with a base portion (20) of the casing (20, 40) in a manner such as to close the cavities (60, 70; 212) hermetically, the lower portion (110) of the body (10) being coated by a portion of the mass (50) of resilient material which integrally forms the deformable walls (502; 503, 504) of the at least one auxiliary cavity (70; 212) ;
**characterized in that** the at lesat one auxiliary cavity comprises;
- a first auxiliary cavity (212) which is located in the vicinity of one end of the base portion (20) of the casing and is provided, at the top, with a valve body (502) integral with the resilient mass (50) formed on the lower portion (110) of the body (10), the valve body (502) being able to perform only limited movements relative to a rest condition as a result of an exchange of liquid between the main cavity (60) and the first auxiliary cavity (212); and
- a second auxiliary cavity, or expansion chamber (70), which is located in the vicinity of the opposite end of the base portion (20) of the casing and has at least one resiliently deformable wall (503, 504) suitable for permitting variations of the volume of the expansion chamber (70) greater than those permitted by the valve body (502) for the first auxiliary cavity (212).

2. A mounting according to Claim 1 in which communication between the main cavity (60) and the first and second auxiliary cavities (212; 70), respectively, takes place through a first duct and through a second duct (210, 512, 518; 80), respectively, of which the first duct (210, 512, 518) has a larger cross-section than the second duct (80).

3. A mounting according to any one of the preceding claims, **characterized in that** the lower portion (110) of the body (10) is substantially flat and is interposed between the base portion (20) and a stop portion (40) defining a surface for limiting the movements of the upper portion (30, 150) of the body (10) relative to the casing (20, 40), the stop portion (40) being separate from the base portion (20) and fixable thereto.

4. A mounting according to Claim 3, **characterized in that** the stop portion (40) is substantially a double-elbowed strap.

5. A mounting according to any one of the preceding claims, **characterized in that** the lower portion (110) of the body (10) comprises a collar portion (111) which extends towards the base portion (20), is capable of delimiting the working chamber (60) in its interior, and is provided with an outer surface (511, 514, 515) shaped in a manner such as to form, with an internal surface (206, 207, 208) of the base portion (20), the connecting duct (80) between the expansion chamber (70) and the working chamber (60).

6. A mounting according to any one of Claims 3 to 5, **characterized in that** the lower portion (110) of the body (10) comprises a plate-like body (110a) provided with at least one portion (119, 120) which is bent substantially perpendicular thereto, the bent portion (119, 120) being suitable for supporting the at least one resiliently deformable wall (503, 504) of the expansion chamber (70) and being capable of being inserted in a corresponding channelled seat (217, 218) formed in the base portion (20) so as to enclose the expansion chamber (70).

7. A mounting according to Claim 6, **characterized in that** the at least one bent portion (119, 120) of the lower portion (110) of the body (10) comprises a pair of tab-like portions (119, 120) disposed on opposite sides of the expansion chamber (70).

8. A mounting according to Claim 6 or Claim 7, **characterized in that** the channelled seat (217, 218) of the base portion (20) is shaped so as to permit an engagement of the at least one bent portion (119, 120) of the lower portion (110) of the body (10) such as to achieve a hermetic seal between the channelled seat (217, 218) and the bent portion (119, 120)

9. A mounting according to any one of Claims 6 to 8, **characterized in that** the base portion (20) comprises a plurality of projections (214, 216, 219, 220, 221, 222) suitable for being clinched with the plate-like portion (110a) of the lower portion (110) of the body (10) so as to cooperate to close the body (10) hermetically onto the base portion (20).

## Patentansprüche

1. Hydroelastische Halterung zum Einfügen zwischen einem ersten, zu tragenden Vibrationselement und einem zweiten, vom ersten Element zu isolierenden, tragenden Element, insbesondere zur Verbindung einer Antriebseinheit mit einem Fahrzeugaufbau, wobei die Halterung Folgendes umfasst:
- einen Körper (10), umfassend einen starren oberen Teil (30, 150) und einen starren unteren Teil (110), die durch eine Masse (50) von elastischem Material, insbesondere Elastomermaterial, verbunden sind, wobei der obere Teil dazu bestimmt ist, mit dem zu tragenden Element verbunden zu sein;
- einen Mantel (20, 40), der dazu bestimmt ist, mit dem tragenden Element verbunden zu sein, und ein Gehäuse (204) für den Körper (10) bildet; und
- Dämpfungsmittel (60, 70, 80; 212; 501-504) zum Dämpfen der Bewegungen des oberen Teils (30, 150), wobei die Dämpfungsmittel einen Haupthohlraum oder Arbeitsraum (60) und zumindest einen Zusatzhohlraum (70; 212) umfassen, die miteinander kommunizieren, mit Flüssigkeit gefüllt sind und mit elastisch verformbaren Wänden (501; 502; 503, 504) versehen sind, wobei zumindest eine verformbare Wand (501) des Haupthohlraums (60) mit dem oberen Teil (30, 150) des Körpers (10) verbunden ist;
wobei der Körper (10) als Abdeckung gebildet ist, die solcherart an einem Unterteil (20) des Mantels (20, 40) angekoppelt ist, um die Hohlräume (60, 70; 212) hermetisch zu verschließen, wobei der untere Teil (110) des Körpers (10) mit einem Teil der Masse (50) von elastischem Material beschichtet ist, welche in integrierender Weise die verformbaren Wände (502; 503, 504) des zumindest einen Zusatzhohlraums (70; 212) bildet;
**dadurch gekennzeichnet, dass** der zumindest eine Zusatzhohlraum Folgendes umfasst:
- einen ersten Zusatzhohlraum (212), der sich in der Nähe des einen Endes des Unterteils (20) des Mantels befindet und am oberen Ende mit einem Ventilkörper (502) versehen ist, welcher in der am unteren Teil (110) des Körpers (10) gebildeten, elastischen Masse (50) integriert ist, wobei der Ventilkörper (502) infolge eines Flüssigkeitsaustausches zwischen dem Haupthohlraum (60) und dem ersten Zusatzhohlraum (212) nur beschränkte Bewegungen in Bezug auf einen Ruhezustand ausführen kann; und
- einen zweiten Zusatzhohlräum oder Expansionsraum (70), der sich in der Nähe des gegenüberliegenden Endes des Unterteils (20) des Mantels befindet und zumindest eine elastisch verformbare Wand (503, 504) aufweist, die dafür geeignet ist, Veränderungen des Volumens des Expansionsraums (70) zu ermöglichen, welche größer sind als jene, die durch den Ventilkörper (502) für den ersten Zusatzhohlraum (212) ermöglicht werden.

2. Halterung gemäß Anspruch 1, bei welcher die Kommunikation zwischen dem Haupthohlraum (60) und dem ersten bzw. dem zweiten Zusatzhohlraum (212; 70) durch ein erstes Rohr bzw. durch ein zweites Rohr (210, 512, 518; 80) erfolgt, wovon das erste Rohr (210, 512, 518) einen größeren Querschnitt als das zweite Rohr (80) aufweist.

3. Halterung gemäß einem der vorhergehenden Ansprüche, **dadurch gekennzeichnet, dass** der untere Teil (110) des Körpers (10) im Wesentlichen flach ist und zwischen dem Unterteil (20) und einem Anschlagteil (40) eingefügt ist, welcher eine Fläche zum Einschränken der Bewegungen des oberen Teils (30, 150) des Körpers (10) in Bezug auf den Mantel (20, 40) definiert, wobei der Anschlagteil (40) vom Unterteil (20) getrennt und daran fixierbar ist.

4. Halterung gemäß Anspruch 3, **dadurch gekennzeichnet, dass** es sich beim Anschlagteil (40) im Wesentlichen um einen doppelt knieförmigen Bügel handelt.

5. Halterung gemäß einem der vorhergehenden Ansprüche, **dadurch gekennzeichnet, dass** der untere Teil (110) des Körpers (10) einen Ringteil (111) umfasst, der sich zum Unterteil (20) erstreckt, zum Begrenzen des Arbeitsraums (60) in seinem Inneren fähig ist und mit einer Außenfläche (511, 514, 515) versehen ist, die in einer solchen Weise geformt ist, um mit einer Innenwand (206, 207, 208) des Unterteils (20) das Verbindungsrohr (80) zwischen dem Expansionsraum (70) und dem Arbeitsraum (60) zu bilden.

6. Halterung gemäß einem der Ansprüche 3 bis 5, **dadurch gekennzeichnet, dass** der untere Teil (110) des Körpers (10) einen plattenartigen Körper (110a) umfasst, der mit zumindest einem Abschnitt (119, 120) versehen ist, welcher im Wesentlichen lotrecht dazu gebogen ist, wobei der gebogene Abschnitt (119, 120) dafür geeignet ist, die zumindest eine elastisch verformbare Wand (503, 504) des Expansionsraums (70) zu tragen, und in einem entsprechenden, im Unterteil (20) gebildeten, genuteten Sitz (217, 218) eingesetzt werden kann, um den Expansionsraum (70) zu umschließen.

7. Halterung gemäß Anspruch 6, **dadurch gekennzeichnet, dass** der zumindest eine gebogene Abschnitt (119, 120) des unteren Teils (110) des Körpers (10) ein Paar von streifenähnlichen Abschnitten (119, 120) umfasst, die an gegenüberliegenden Seiten des Expansionsraums (70) angeordnet sind.

8. Halterung gemäß Anspruch 6 oder Anspruch 7, **dadurch gekennzeichnet, dass** der genutete Sitz (217, 218) des Unterteils (20) solcherart geformt ist, um einen Eingriff des zumindest einen gebogenen Abschnitts (119, 120) des unteren Teils (110) des Körpers (10) zu ermöglichen, um eine hermetische Abdichtung zwischen dem genuteten Sitz (217, 218) und dem gebogenen Abschnitt (119, 120) zu erzielen.

9. Halterung gemäß einem der Ansprüche 6 bis 8, **dadurch gekennzeichnet, dass** der Unterteil (20) eine Mehrzahl von Vorsprüngen (214, 216, 219, 220, 221, 222) umfasst, die dafür geeignet sind, mit dem plattenartigen Abschnitt (110a) des unteren Teils (110) des Körpers (10) vernietet zu werden, um zwecks eines hermetischen Verschließens des Körpers (10) am Unterteil (20) zusammenzuwirken.

## Revendications

1. Support hydroélastique destiné à être interposé entre un premier élément de vibration devant être supporté et un second élément porteur devant être isolé du premier élément, en particulier pour la connexion d'une unité de propulsion à une structure de véhicule, le support comprenant :
- un corps (10) comprenant une partie supérieure rigide (30, 150) et une partie inférieure rigide (110) qui sont reliées par une masse (50) de matériau élastique, en particulier un matériau élastomère, la partie supérieure étant destinée à être reliée à l'élément devant être supporté ;
- un boîtier (20, 40) qui est destiné à être connecté à l'élément porteur et qui forme un logement (204) pour le corps (10) ; et
- des moyens d'amortissement (60, 70, 80 ; 212 ; 501-504) pour amortir les mouvements de la partie supérieure (30, 150), les moyens d'amortissement comprenant une cavité principale ou cellule de travail (60) et au moins une cavité secondaire (70 ; 212) en communication l'une avec l'autre, qui sont remplies d'un liquide et qui sont pourvues de parois pouvant être déformés de manière élastique (501 ; 502 ; 503 ; 504), au moins une paroi déformable (501) de la cavité principale (60) étant connectée à la partie supérieure (30, 150) du corps (10) ;
dans lequel le corps (10) est formé comme un couvercle qui est couplé à une partie de base (20) du boîtier (20, 40) de façon à fermer les cavités (60, 70 ; 212) de manière hermétique, la partie inférieure (110) du corps (10) étant revêtue par une partie de la masse (50) de matériau élastique qui forme intégralement les parois déformables (502 ; 503 ; 504) de la au moins une cavité secondaire (70 ; 212) ;
**caractérisé en ce que** la au moins une cavité comprend :
- une première cavité secondaire (212) qui est située à proximité d'une extrémité de la partie de base (20) du boîtier et qui est pourvue au niveau de sa partie supérieure, d'un corps de soupape (502) d'un seul tenant avec la masse élastique (50) formée sur la partie inférieure (110) du corps (10), le corps de soupape (502) pouvant effectuer seulement des mouvements limités par rapport à une condition au repos comme résultat d'un échange de liquide entre la cavité principale (60) et la première cavité secondaire (212) ; et
- une seconde cavité auxiliaire, ou chambre d'expansion (70), qui est située à proximité de l'extrémité opposée de la partie de base (20) du boîtier et qui a au moins une paroi pouvant être déformée de manière élastique (503, 504) appropriée pour permettre des variations du volume de la chambre d'expansion (70) supérieures à celles autorisées par le corps de soupape (502) pour la première cavité secondaire (212).

2. Support selon la revendication 1, dans lequel la communication entre la cavité principale (60) et les première et seconde cavités auxiliaires (212 ; 70), respectivement, a lieu par l'intermédiaire d'un premier conduit et par l'intermédiaire d'un second conduit (210, 512, 518 ; 80), respectivement, le premier conduit (210, 512, 518) ayant une coupe transversale plus grande que celle du second conduit (80).

3. Support selon l'une quelconque des revendications précédentes, **caractérisé en ce que** la partie inférieure (110) du corps (10) est sensiblement plate et est interposée entre la partie de base (20) et une partie de butée (40) définissant une surface pour limiter les mouvements de la partie supérieure (30, 150) du corps (10) par rapport au boîtier (20, 40), la partie de butée (40) étant séparée de la partie de base (20) et pouvant être fixée à celle-ci.

4. Support selon la revendication 3, **caractérisé en ce que** la partie de butée (40) est essentiellement une bande à deux coudes.

5. Support selon l'une quelconque des revendications précédentes, **caractérisé en ce que** la partie inférieure (110) du corps (10) comprend une partie de collier (111) qui s'étend vers la partie de base (20), peut délimiter la cellule de travail (60) dans son intérieur et est pourvue d'une surface externe (511, 514, 515) formée de façon à former, avec une surface interne (206, 207, 208) de la partie de base (20), le conduit de connexion (80) entre la chambre d'expansion (70) et la cellule de travail (60).

6. Support selon l'une quelconque des revendications 3 à 5, **caractérisé en ce que** la partie inférieure (110) du corps (10) comprend un corps similaire à une plaque (110a) pourvu d'au moins une partie (119, 120) qui est courbée sensiblement de manière perpendiculaire à celui-ci, la partie courbée (119, 120) étant appropriée pour supporter la au moins une paroi pouvant être déformée de manière élastique (503, 504) de la chambre d'expansion (70) et pouvant être insérée dans un siège cannelé correspondant (217, 218) formé dans la partie de base (20) de façon à entourer la chambre d'expansion (70).

7. Support selon la revendication 6, **caractérisé en ce que** la au moins une partie courbée (119, 120) de la partie inférieure (110) du corps (10) comprends une paire de partie similaires à des pattes (119, 120) disposées sur des côtés opposés de la chambre d'expansion (70).

8. Support selon la revendication 6 ou la revendication 7, **caractérisé en ce que** le siège cannelé (217, 218) de la partie de base (20) est formé de façon à permettre un engagement de la au moins une partie courbée (119, 120) de la partie inférieure (110) du corps (10) de façon à réaliser un joint d'étanchéité entre le siège cannelé (217, 218) et la partie courbée (119, 120).

9. Support selon l'une quelconque des revendications 6 à 8, **caractérisé en ce que** la partie de base (20) comprend une pluralité de saillies (214, 216, 219, 220, 221, 222) appropriées pour être rivetées à la partie similaire à une plaque (110a) de la partie inférieure (110) du corps (10) de façon à coopérer pour fermer le corps (10) hermétiquement sur la partie de base (20).
